# EUROPEAN PATENT APPLICATION

(11) **EP 2 418 870 A1**
(43) Date of publication of application: **15.02.2012**
(21) Application number: 11174787.9
(22) Date of filing: 21.07.2011
(51) Int. Cl.: H04N 21/44

(54) **Transmission and receiving apparatus and transmission and receiving method**

(30) Priority: 09.08.2010 JP 2010178946
(71) Applicant: Sony Corporation, Tokyo 108-0075 (JP)
(72) Inventor: Miura, Haruyuki, Minato-ku, Tokyo 108-0075 (JP); Sasaki, Takashi, Minato-ku, Tokyo 108-0075 (JP); Saito, Kenichi, Minato-ku, Tokyo 108-0075 (JP); Sadazumi, Takeshi, Minato-ku, Tokyo 108-0075 (JP)
(74) Representative: Robinson, Nigel Alexander Julian

(57) **Abstract**

A transmission and receiving apparatus includes: a receiving section receiving a content signal conforming to a predetermined transmission standard, and restoring a video signal included in the content signal to output the video signal; a video-signal processing section performing predetermined processing on the video signal output from the receiving section; a selection section selecting either a signal path allowing the video signal to go through the video-signal processing section or a signal path not allowing the video signal to go through the video-signal processing section; and a transmission section converting the video signal having gone through the signal path selected by the selection section into a content signal conforming to the predetermined transmission standard, and transmitting the content signal.

## Description

The present disclosure relates to a transmission and receiving apparatus, and a transmission and receiving method. More specifically, the present disclosure relates to a transmission and receiving apparatus capable of supporting signals having a plurality of formats by selecting a path of the signal, and to a transmission and receiving method.

In recent years, AV (Audio/Visual) devices handling digital video signals and audio signals have become widespread. And along with this trend, HDMI (High Definition Multimedia Interface) is becoming widespread as an interface for transmitting digital video signals and audio signals, or as a digital-data transmission standard. HDMI has been developed on the basis of DVI (Digital Video Interface), which is a standard specification for connecting a computer and a television receiver, with additional functions, such as an audio transmission function, a control-signal transmission function, etc. HDMI is widely employed mainly for a television receiver, a Blu-ray (a registered trademark) disc player, a hard disk recorder, a game machine, etc..

In HDMI, a transmission side is called a source, and a receiving side is called a sink.

HDMI allows transmission of a video signal, an audio signal, and further a control signal from a source to a sink using one cable. The transmission of a video signal and an audio signal is in one direction, that is to say, from a source to a sink. It is possible to configure an AV system capable of giving pleasure of high-quality video and audio by connecting a source and a sink that are conforming to HDMI using a HDMI cable through a repeater. In this AV system, a content signal including a video signal and an audio signal is transmitted from the source to the sink through the repeater.

As a source, for example, a disc playback apparatus, such as a Blu-ray disc player, a DVD (Digital Versatile Disc) player, etc., are given. Also, as a sink, a television receiver, a projector, etc., are given as an example.

A repeater includes an HDMI transmission section, an HDMI receiving section, a video processing section, etc. The repeater receives a content signal including a video signal and an audio signal that are transmitted from a source by the HDMI receiving section, and outputs the video signal to the video processing section. And the video processing section performs predetermined processing, such as restoration processing from deterioration occurred during transmission, etc., (Japanese Unexamined Patent Application Publication No. 2006-186544). Also, some of the repeaters perform processing combining a video related to an input video signal with a GUI (Graphical User Interface). The video signal having been subjected to the processing by the video processing section is converted into a content signal by the HDMI transmission section, and is transmitted to a television receiver, etc., which is a sink, to be output as a video in the end.

The repeater is provided with EDIDROM that holds EDID (Extended Display Identification Data), which is data on a state of the repeater itself, information on performance of supporting video formats, audio formats, etc., various kinds of setting values, etc. And the EDID held in the EDIDROM are read among devices through a transmission channel called DDC (Display Data Channel) in HDMI. Thereby, the source is allowed to recognize video formats supported by the repeater and the sink, and to transmit a content signal including a video signal conforming to the format.

However, in a repeater, although the HDMI transmission section and the HDMI receiving section support a specific video format, such as 3D, etc., the video processing section sometimes does not support that format. In that case, the repeater becomes non-3D capable as a whole, and thus the EDID of the repeater is not allowed to include a description that the repeater is 3D-capable.

Thereby, even if an HDMI receiving section and an HDMI transmission section included in a repeater, and further a sink are 3D capable, the source recognizes that the repeater is not 3D capable, and does not transmit a content signal including a 3D-video signal disadvantageously. Also, if a source transmits a 3D-content signal, the video processing section of the repeater is not allowed to perform processing on the 3D-video signal, and thus the sink is eventually not allowed to output a 3D video.

Accordingly, it is desirable to provide a transmission and receiving apparatus capable of supporting signals having a plurality of formats by selecting a path of the signal, and a transmission and receiving method.

According to an embodiment of the present disclosure, there is provided a transmission and receiving apparatus including: a receiving section receiving a content signal conforming to a predetermined transmission standard, and restoring a video signal included in the content signal to output the video signal; a video-signal processing section performing predetermined processing on the video signal output from the receiving section; a selection section selecting either a signal path allowing the video signal to go through the video-signal processing section or a signal path not allowing the video signal to go through the video-signal processing section; and a transmission section converting the video signal having gone through the signal path selected by the selection section into a content signal conforming to the predetermined transmission standard, and transmitting the content signal.

According to another embodiment of the present disclosure, there is provided a method including: receiving a content signal conforming to a predetermined transmission standard, and restoring a video signal included in the content signal to output the video signal; performing predetermined processing on the video signal output from the receiving by a video-signal processing section; selecting either a signal path allowing the video signal to go through the video-signal processing section or a signal path not allowing the video signal to go through the video-signal processing section; and converting the video signal having gone through the signal path selected by the selecting into a content signal conforming to the predetermined transmission standard, and transmitting the content signal.

By this disclosure, it becomes possible to support signals having a plurality of formats by selecting a path of the signal inside a transmission and receiving apparatus on the basis of a format of an input signal.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:
FIG. 1 is a block diagram illustrating a configuration of an AV system including a transmission and receiving apparatus according to an embodiment of the present disclosure;
FIG. 2 is a diagram illustrating an overview of transmission and receiving of signals in HDMI;
FIG. 3 is a diagram illustrating an example of a data structure of an AVI InfoFrame packet;
FIG. 4 is a diagram illustrating an example of video codes;
FIG. 5 is a diagram illustrating details of 3D-methods;
FIGs. 6A and 6B are diagrams illustrating structures of a 2D-video and a 3D-video in a frame packing method, respectively;
FIGs. 7A and 7B are diagrams illustrating structures of a 2D-video and a 3D-video in a side-by-side method, respectively;
FIGs. 8A and 8B are diagrams illustrating structures of a 2D-video and a 3D-video in a Top and Bottom method, respectively;
FIGs. 9A, 9B, 9C, and 9D are diagrams illustrating an example of a data structure of a Vendor Specific InfoFrame packet;
FIGs. 10A, 10B, 10C, and 10D are diagrams illustrating an overview of HDCP authentication performed in an embodiment of the present disclosure;
FIG. 11 is a sequence diagram illustrating details of HDCP authentication performed in an embodiment of the present disclosure when a video format is 2D;
FIG. 12 is a sequence diagram illustrating details of HDCP authentication performed in an embodiment of the present disclosure when a video format is 3D;
FIGs. 13A, 13B, 13C, and 13D are diagrams illustrating an overview of flows of changing buses and HDCP authentication;
FIGs. 14A and 14B are sequence diagrams illustrating details of flows of changing buses and HDCP authentication; and
FIGs. 15A and 15B are block diagrams illustrating flows of signals for displaying a GUI when the video format is 3D.

In the following, a description will be given of embodiments of the present disclosure with reference to the drawings. In this regard, the description will be given in the following order.

### 1. Embodiment

### 1.1 Configurations of transmission and receiving apparatus and AV system including transmission and receiving apparatus

### 1.2 Format determination processing and signal-path selection processing in transmission and receiving apparatus

### 1.3 HDCP authentication processing

### 2. Variations

### 1. Embodiment

### 1.1 Configurations of transmission and receiving apparatus and AV system including transmission and receiving apparatus

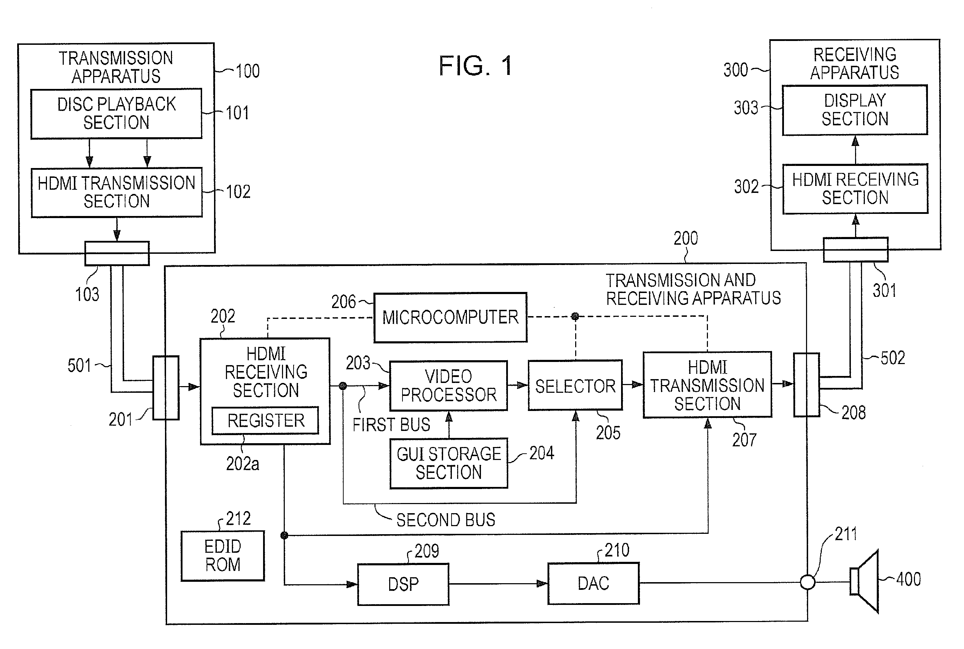

FIG. 1 is a block diagram illustrating a configuration of an AV system including a transmission and receiving apparatus 200 according to an embodiment of the present disclosure. The AV system includes a transmission apparatus 100 as a source, a receiving apparatus 300 as a sink, and the transmission and receiving apparatus 200 as a repeater disposed so as to relay signals between the transmission and the receiving apparatuses.

The transmission apparatus 100 and the transmission and receiving apparatus 200 are connected through a first HDMI cable 501. Also, the transmission and receiving apparatus 200 and the receiving apparatus 300 are connected through a second HDMI cable 502. In this regard, in FIG. 1, only component parts of the transmission apparatus 100, the transmission and receiving apparatus 200, and the receiving apparatus 300 that transmit and receive signals through HDMI and process the signals are extracted and illustrated.

The transmission apparatus 100, which is a source, is a disc playback apparatus, such as a Blu-ray disc player, a DVD player, etc., for example. The transmission apparatus 100 includes a disc playback section 101, an HDMI transmission section 102, and an HDMI output terminal 103. The disc playback section 101 reads (plays back) a video signal and an audio signal constituting a content from a loaded disc-state recording medium. The disc playback section 101 includes a rotational drive section rotating the disc, an optical pick-up irradiating laser light on the disc and reading the signals, a video-signal processing section (all of the sections are not shown in the figure) performing predetermined processing on the signals read by the optical pick-up, etc. The digital video signal and the audio signal that have been read by the disc playback section 101 are output to the HDMI transmission section 102. Also, the disc playback section 101 outputs an audio clock to the HDMI transmission section 102. The audio clock is used for ACR (Audio Clock Regeneration) in HDMI, and is synchronized with the audio signal read by the disc playback section 101.

The HDMI transmission section 102 converts the input video signal and audio signal into a transmission signal in accordance with TMDS (Transition Minimized Differential Signaling). In HDMI, a TMDS serial transmission method is used as a transmission method. In the following, a content signal whose video signal and audio signal have been converted in accordance with TMDS is called a HDMI signal. And the HDMI transmission section 102 outputs the HDMI signal to the HDMI output terminal 103. Also, the HDMI transmission section 102 performs authentication processing with the HDMI receiving section 202 of the transmission and receiving apparatus 200. Details of the authentication processing will be described later.

The HDMI output terminal 103 includes a female plug having a structure conforming to the HDMI standard, and is connected to one of male plugs of the first HDMI cable 501. The HDMI signal output from the HDMI transmission section 102 to the HDMI output terminal 103 is transmitted from the HDMI output terminal 103 to the transmission and receiving apparatus 200 through the first HDMI cable 501.

When transmitting an HDMI signal, the transmission apparatus 100 transmits information on the formats of the video signal and the audio signal, etc., that are included in the HDMI signal currently being transmitted. The transmission apparatus 100 transmits the information by inserting the information in a blanking period of the video signal to be transmitted to the transmission and receiving apparatus 200. The information on the formats of the video signal, the audio signal, etc., is transmitted using, for example, an AVI (Auxiliary Video Information) InfoFrame packet, a Vendor Specific InfoFrame packet, an AudioInfoFrame packet, etc., of HDMI.

In this regard, the transmission apparatus 100 is not limited to a Blu-ray disc player, and a DVD player. The transmission apparatus 100 as a source may be any apparatus provided that the apparatus is capable of conforming to HDMI, and outputting a content including a video signal and an audio signal. The apparatuses to be sources include, for example, a hard disk recorder, a personal computer, a set-top box of a cable television, an entertainment apparatus, etc., such as PlayStation (a registered trademark of Sony Computer Entertainment, Inc.) 3, etc.

The transmission and receiving apparatus 200 is a so-called amplification apparatus functioning as a repeater. The transmission and receiving apparatus 200 includes an HDMI input terminal 201, an HDMI receiving section 202, a register 202a, a video processor 203, a GUI storage section 204, a selector 205, a microcomputer 206, an HDMI transmission section 207, an HDMI output terminal 208, a DSP (Digital Signal Processor) 209, a DAC (Digital Analog Converter) 210, an audio output terminal 211, and an EDIDROM (Read Only Memory) 212. A speaker 400 is connected to the transmission and receiving apparatus 200 through the audio output terminal 211.

The HDMI input terminal 201 includes a female plug having a structure conforming to the HDMI standard, and is connected to the other of the male plugs of the first HDMI cable 501. The HDMI signal transmitted from the transmission apparatus 100 is input into the transmission and receiving apparatus 200 through the HDMI input terminal 201. The HDMI signal input through the HDMI input terminal 210 is received by the HDMI receiving section 202.

The HDMI receiving section 202 extracts and restores the video signal and the audio signal included in the received HDMI signal. And the HDMI receiving section 202 outputs the restored video signal. Also, the HDMI receiving section 202 outputs the audio signal to the HDMI transmission section 207 and the DSP 209. The HDMI receiving section 202 corresponds to the receiving section in claims. The register 202a is a storage device storing attribute information of the video signal included in the HDMI signal, such as AVI InfoFrame, Vendor Specific InfoFrame, etc., used for determining a video format.

The video processor 203 performs predetermined processing, such as reading GUI image data, which is stored in the GUI storage section 204, and combining a video related to the input video signal with a GUI as necessary, etc. The video processor 203 corresponds to the video-signal processing section in claims. And the video signal having been processed by the video processor 203 is output to the selector 205. In the present embodiment, it is assumed that the video processor 203 does not support a 3D-video signal.

The selector 205 selects either a signal path allowing the video signal to go through the video processor 203, or a signal path not allowing the video signal to go through the video processor 203 under the control of the microcomputer 206. If the signal path allowing the video signal to go through the video processor 203 is selected, the video signal is processed by the video processor 203. If the signal path not allowing the video signal to go through the video processor 203 is selected, the video signal is not processed by the video processor 203.

In the following, the signal path going through the video processor 203 is called a first bus, and a path directly connecting the HDMI receiving section 202 and the HDMI transmission section 207 without going through the video processor 203 is called a second bus. The selector 205 changes the first bus and the second bus. The selector 205 corresponds to the selection section in claims.

The microcomputer 206 includes, for example, a CPU (Central Processing Unit), a RAM (Random Access Memory) and a ROM (Read Only Memory). The ROM stores programs, etc., read and operated by the CPU. The RAM is used for a work memory of the CPU. The CPU executes various kinds of processing in accordance with the programs stored in the ROM to issue commands so as to control the entire transmission and receiving apparatus 200.

Also, the microcomputer 206 executes a predetermined program so as to determine a format of the video signal. On the basis of the determination result, the microcomputer 206 transmits a predetermined control signal to the selector 205 to control the selector 205 to change buses. In the present embodiment, the microcomputer 206 determines whether the format of the video signal is 2D or 3D. The microcomputer 206 controls the selector 205 to select the first bus if the format is 2D, and to select the second bus if the format is 3D. A description will be given of a method of determining a video format by the microcomputer 206 later. The microcomputer corresponds to the format determination section in claims. Also, although details will be described later, the microcomputer 206 controls the HDMI transmission section 207 to stop and to restart transmission of the HDMI signal along with a change by the selector 205.

The HDMI transmission section 207 converts the video signal output from the selector 205 and the audio signal output from the HDMI receiving section 202 into an HDMI signal again, and outputs the HDMI signal to the HDMI output terminal 208. The HDMI transmission section 207 corresponds to the transmission section in claims. And the HDMI signal is transmitted from the HDMI output terminal 208 to the receiving apparatus 300 through the second HDMI cable 502.

The DSP 209 performs predetermined audio signal processing on the audio signal output from the HDMI receiving section 202, and outputs the signal to the DAC 210. The DAC 210 performs D/A conversion on the audio signal output from the DSP 209 to produce an analog audio signal. And the analog audio signal is output to the speaker 400 through the audio output terminal 211. The speaker 400 is a sound output means for outputting the input analog audio signal as sound. The speaker 400 outputs sound in accordance with the audio signal so as to enable the user to enjoy the sound of the content recorded on the disc.

The EDIDROM 212 stores EDID, which is data on information of a state of the transmission and receiving apparatus 200 itself, performance information of supporting video formats, audio formats, etc., whether 3D-capable or not, and various kinds of setting values, etc. The transmission apparatus 100, which is a source, refers to information, described in a Vendor Specific Data Block in the EDID, of whether 3D-capable or not, so as to determine whether the transmission and receiving apparatus 200 is 3D-capable or not.

The receiving apparatus 300 is a display means for displaying and providing a video or an image to the user. For example, the receiving apparatus 300 is a television receiver, a projector, a personal computer, etc. The receiving apparatus 300 includes an HDMI input terminal 301, an HDMI receiving section 302, and a display section 303. The other of the male plugs of the second HDMI cable 502 is connected to the HDMI input terminal 301. The HDMI receiving section 302 receives the HDMI signal transmitted from the transmission and receiving apparatus 200 through the second HDMI cable 502, and extracts and restores the video signal included in the HDMI signal. And the video signal is output to the display section 303 so as to be displayed as a video to be provided to the user in the end. The display section 303 is a display panel, for example, an LCD (Liquid Crystal Display), a PDP (Plasma Display Panel), an organic EL (Electro Luminescence) panel, etc. An AV system according to the present embodiment is configured in this manner.

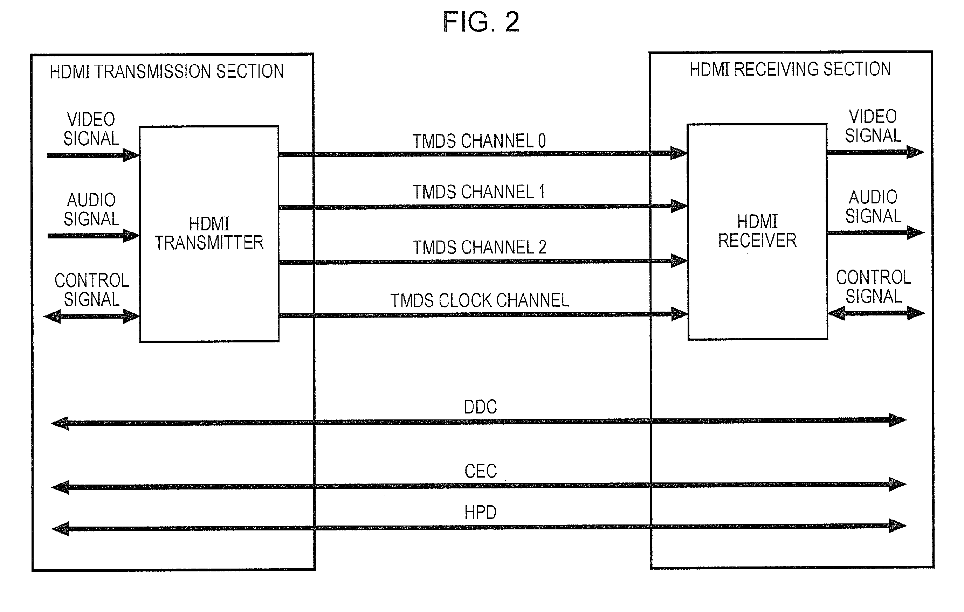

FIG. 2 is a diagram illustrating an overview of transmission and receiving of signals in compliance with the HDMI standard. The transmission of an HDMI signal including a video signal and an audio signal in HDMI is not bi-directional, but is one-directional, namely from the HDMI transmission section, which is a source, to the HDMI receiving section, which is a sink. In HDMI, an audio signal is transmitted using blank periods among videos. The HDMI transmission section includes an HDMI transmitter. The HDMI transmitter generates transmission data so as to fit the input video signal, audio signal, and control signal into a predetermined structure. Next, the HDMI transmitter converts the transmission signal obtained in such a way into an HDMI signal. And the HDMI transmitter transmits the HDMI signal to the HDMI receiving section through three TMDS channels 0, 1, and 2, which are transmission paths.

In HDMI, in an effective image period, which is a difference period when a horizontal blanking period and a vertical blanking period are excluded from a period between a certain vertical synchronization signal and a next vertical synchronization signal, a differential signal corresponding to pixel data of an image for one uncompressed screen is transmitted through the TMDS channels 0, 1, and 2. Also, in a horizontal blanking period or a vertical blanking period, a differential signal corresponding to an audio signal, control data, etc., is transmitted to the HDMI receiving section through the TMDS channels 0, 1, and 2.

Transmission of signals through the TMDS channels 0, 1, and 2 is separately performed in three periods, namely a Video Data period, a Data Island period, and a Control period. The Video Data period is a period from a rising point of a certain vertical synchronization signal to a rising point of a next vertical synchronization signal. Image data is disposed in the Video Data period, and is transmitted.

The Data Island period is assigned to a blanking period excluding a Video Data period. In a Data Island period, an audio signal and auxiliary data, AVI InfoFrame, Vendor Specific InfoFrame, etc., are disposed and transmitted. Details on the AVI InfoFrame, and the Vendor Specific InfoFrame will be described later. The AVI InfoFrame and the Vendor Specific InfoFrame are used for determination of a video format, which will be described later.

The Control period is assigned to a blanking period in the same manner as the Data Island period. A vertical synchronization signal (Vsync) and a horizontal synchronization signal (Hsync) as timing information indicating video timing, DE (Data Enable), a control packet, etc., are disposed in the Control period, and is transmitted.

Also, in HDMI, a TMDS clock channel is provided in addition to the TMDS channels. The TMDS clock channel is a transmission channel for transmitting a TMDS clock in synchronism with the video signal transmitted through the TMDS channels 0 to 2. The TMDS clock is transmitted from the HDMI transmission section to the HDMI receiving section through the TMDS clock channel.

The HDMI receiving section serving as a sink includes a HDMI receiver. The HDMI receiver receives an HDMI signal and the TMDS clock that are transmitted from the HDMI transmission section through the TMDS channels 0, 1, and 2 and the TMDS clock channel, respectively. In this regard, the HDMI receiver receives the HDMI signal in synchronism with the TMDS clock. And the HDMI receiver extracts and restores the video signal, the audio signal, and the control signal from the HDMI signal received through the TMDS channels 0, 1, and 2.

And the HDMI receiver outputs the restored video signal to the video processor, for example, and outputs the restored audio signal to the DSP, for example. Also, the HDMI receiver extracts and restores the control signal. The control signal is used for the control, for example, between a device including the HDMI receiving section and a device including the HDMI transmission section. In this manner, the video signal, the audio signal, and the control signal are transmitted and received by the HDMI transmitter and the HDMI receiver in accordance with the TMDS standard.

Also, a transmission channel called a DDC (Display Data Channel) is provided between the HDMI transmission section and the HDMI receiving section in addition to the TMDS channels 0, 1, and 2 and the TMDS clock channel. Communications between the HDMI transmission section and the HDMI receiving section are performed through the DDC together with the transmission and the receiving of the HDMI signal and the TMDS clock between the HDMI transmitter and the HDMI receiver. The DDC is used for reading the EDID held in the EDIDROM. By the communication through the DDC, it becomes possible to read information of a device including the HDMI receiving section, and various kinds of setting values.

Also, in HDMI, mutual communications are possible by CEC (Consumer Electronics Control). With communication using CEC, it is possible to perform bi-directional communication of device control signals, for example, such as a command, etc., in accordance with a remote control operation, etc., between a source and a sink.

Further, in HDMI, a transmission channel called an HPD (Hot Plug Detect) is provided. It is possible for a source to detect connection of a sink device, etc., by an HPD signal transmitted and received through the HPD.

### 1.2 Format determination processing and signal-path selection processing in transmission and receiving apparatus

In the following, a description will be given of processing performed in the present embodiment. When the transmission apparatus 100 transmits an HDMI signal to the transmission and receiving apparatus 200 through the HDMI cable 501, the HDMI receiving section 202 of the transmission and receiving apparatus 200 receives the HDMI signal. The timing information, AVI InfoFrame, and Vendor Specific InfoFrame that are included in the HDMI signal and transmitted are stored in the register 202a included in the HDMI receiving section 202. And when the HDMI receiving section 202 receives the HDMI signal, the microcomputer 206 reads the timing information, the AVI InfoFrame, and the Vendor Specific InfoFrame that are stored in the register 202a, and determines the video format. In the present embodiment, the microcomputer 206 determines whether the video format is 2D or 3D.

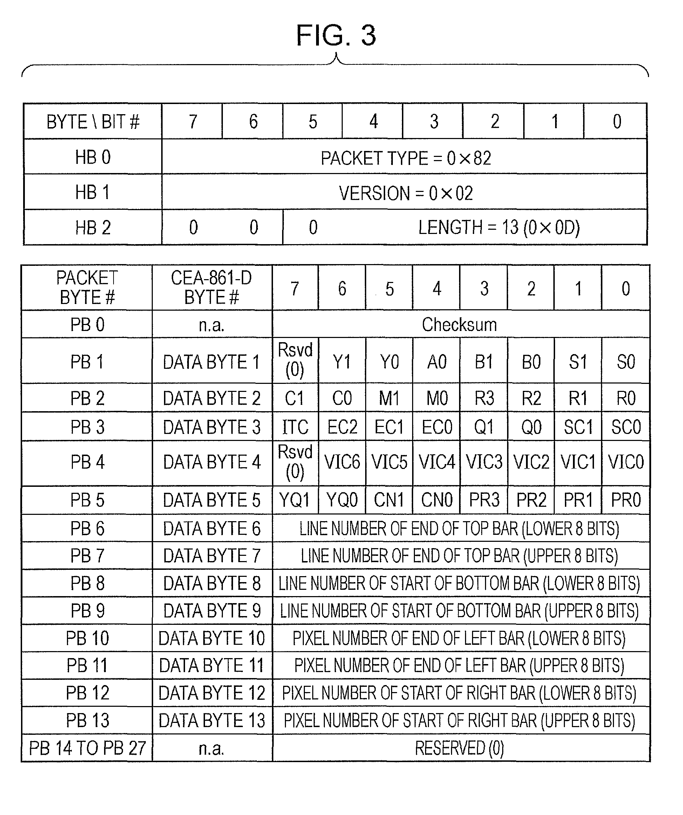

Here, a description will be given of the video-format determination performed by the microcomputer 206. First, the microcomputer 206 reads an AVI InfoFrame packet stored in the register 202a. FIG. 3 is a diagram illustrating an example of a data structure of the AVI InfoFrame packet. In HDMI, information on a video signal is transmitted from a source to a sink using the AVI InfoFrame packet. The AVI InfoFrame packet includes information, such as, resolution information of the video signal to be transmitted, frequency information, color space information, an aspect ratio of an image, etc., for example.

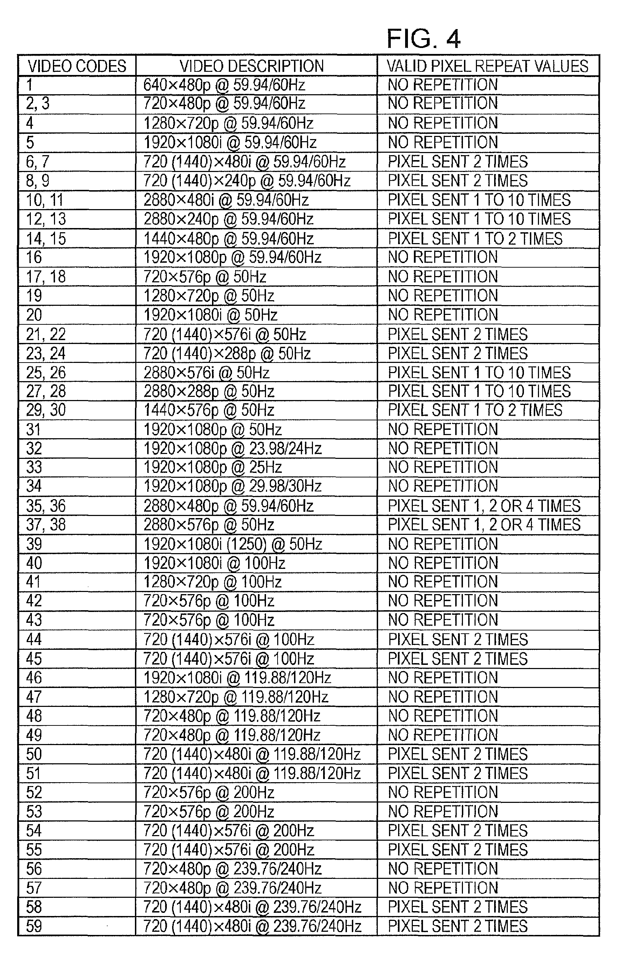

It is possible to determine the video code of the video signal by referring to VIC6 to VIC0 of the fourth byte of the AVI InfoFrame packet. FIG. 4 is a diagram illustrating an example of video codes. And from the video code, a Vsync (vertical synchronization signal), which specifies timing of drawing an image in a vertical direction, is referenced. A determination is made of whether the video format is 2D or 3D on the basis of the Vsync.

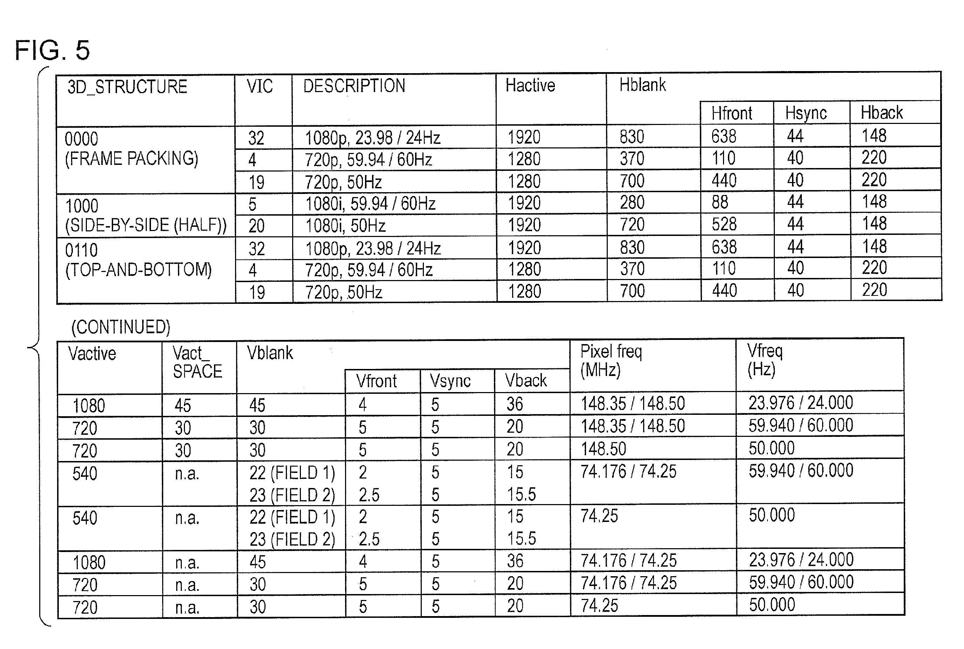

The determination on the basis of Vsync is valid when the 3D method is a frame packing method. FIG. 5 illustrates details of formats of individual 3D methods, respectively. FIG. 5 illustrates, as examples of 3D methods, a frame packing method, a side-by-side method, and a top-and-bottom method. The frame packing method is a method in which two images (a left-eye image and a right-eye image) are arranged one above the other with a same resolution as that of 2D. It is necessary to have a transmission rate two times that of 2D, but it is possible to transmit a video signal without deteriorating the resolution as compared with that of 2D. There is a part called an active space, which has no video signal, between the left-eye image and the right-eye image.

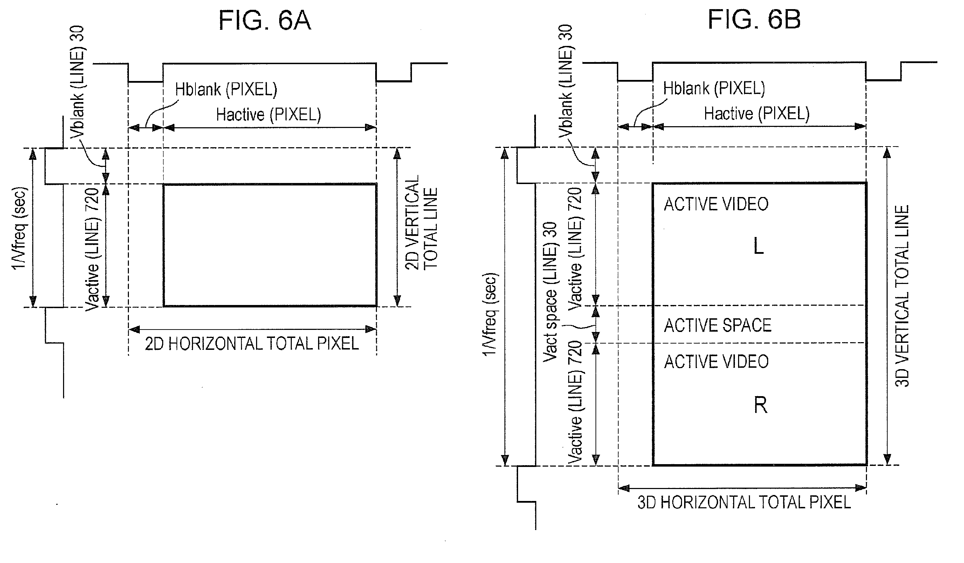

FIGs. 6A and 6B are diagrams illustrating structures of a 2D video and a 3D video (frame packing), respectively, when the video signal is 720p/60Hz. FIG. 6A is in the case of 2D, and FIG. 6B is 3D. In this regard, in 2D in FIG. 6A and in 3D in FIG. 6B, the total number of pixels of 3D in the horizontal direction is equal to the total number of pixels of 2D in the horizontal direction. Also, the total number of lines of 3D in the vertical direction is two times the total number of lines of 2D in the horizontal direction total lines. Further, a pixel-clock frequency in 3D is two times the pixel-clock frequency in 2D.

The Vsync (vertical synchronization signal) becomes Vactive (line) + Vblank (line) = 720 + 30 = 750 in the case of 2D shown in FIG. 6A. On the other hand, the Vsync (vertical synchronization signal) becomes Vactive (line) + Vact space (line) + Vactive (line) + Vblank (line) = 720 + 30 + 720 + 30 = 1500 in the case of 3D (frame packing) shown in FIG. 6B.

In this manner, the Vsyncs (vertical synchronization signal), which specify the timing in the vertical direction when an image is drawn, are different in the case of 2D and 3D (frame packing). This is because, as described above, in the frame packing method, two kinds of image data (a left-eye image data and a right-eye image data) are transmitted by being arranged one above the other with a same resolution as that of 2D. From such a difference in timing, it is possible to determine whether a video format is 2D or 3D in the frame packing method.

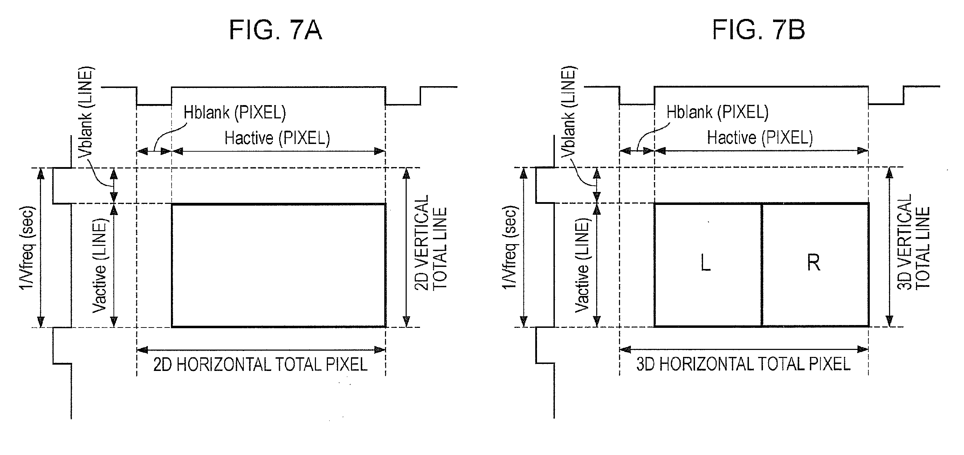

Next, descriptions will be given of determinations in the side-by-side method, and in the top-and-bottom method. As shown in FIG. 7, the side-by-side method is a method in which a left-eye image and a right-eye image are thinned to one half in the horizontal direction, respectively, so as to have a half resolution in the horizontal direction, and the left-eye image and the right-eye image are transmitted by being arranged in the lateral direction.

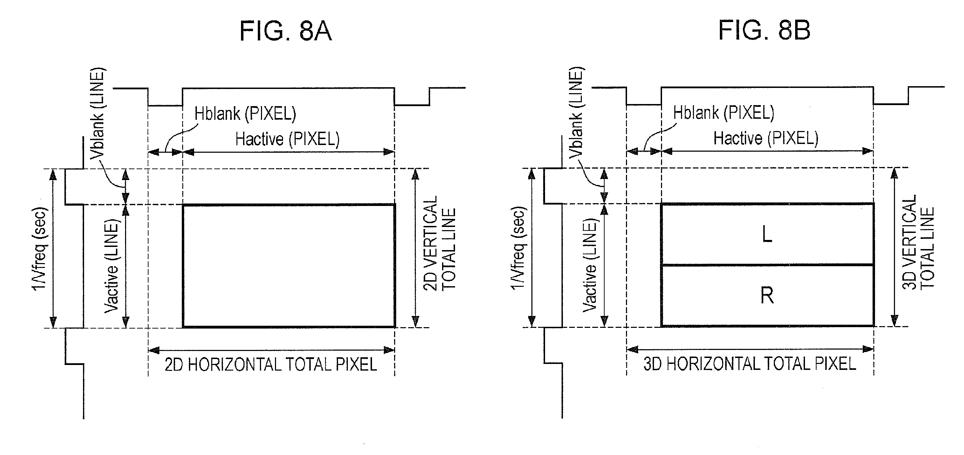

As shown in FIG. 8, the top-and-bottom method is a method in which a left-eye image and a right-eye image are thinned to one half in the vertical direction, respectively, so as to have a half resolution in the vertical direction, and the left-eye image and the right-eye image are transmitted by being arranged in the vertical direction. In both the side-by-side method and the top-and-bottom method, the resolutions are deteriorated, but it is possible to transmit a 3D-video signal with a same transmission rate as that of a 2D-video signal instead.

When VICs are same in the case of 2D, 3D in the side-by-side method, and 3D in the top-and-bottom method, the Vsync (vertical synchronization signal), which specifies timing, becomes the same, and thus it is difficult to determine whether the video format is 2D or 3D by the determination method used in the above-described frame packing method. Accordingly, further, it is possible to determine whether an image is 2D or 3D even if the 3D method is the side-by-side method or the top-and-bottom method using the Vendor Specific InfoFrame.

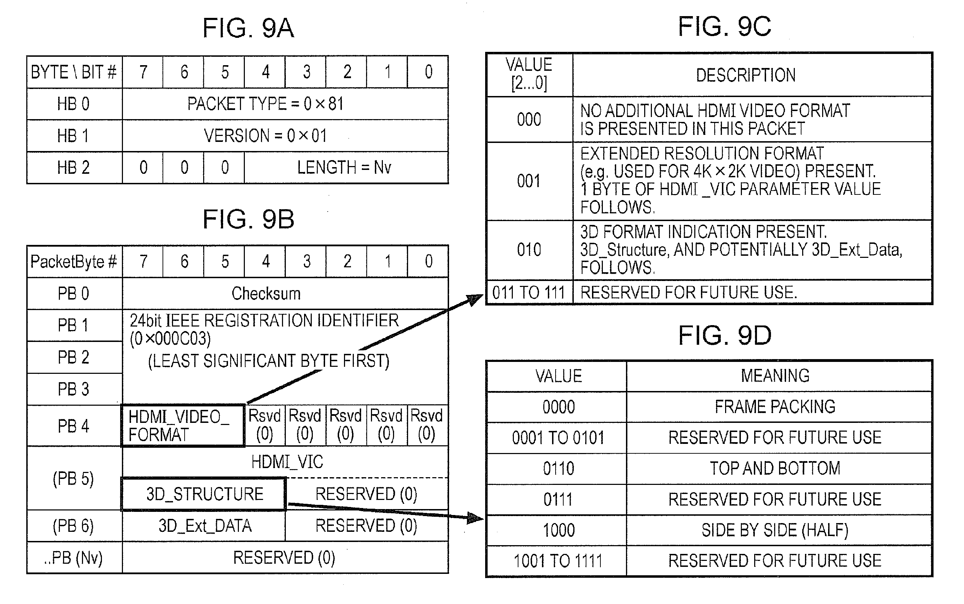

FIGs. 9A, 9B, 9C, and 9D are diagrams illustrating an example of a data structure of a Vendor Specific InfoFrame packet. FIG. 9A illustrates a header of the Vendor Specific InfoFrame packet, and FIG. 9B illustrates contents of the Vendor Specific InfoFrame packet. Also, FIG. 9C shows details of "HDMI video format" in the Vendor Specific InfoFrame packet. Further, FIG. 9D illustrates details of "3D Structure" of the Vendor Specific InfoFrame packet.

A determination of whether a video format is 2D or 3D can be made by referring to a fourth byte, "HDMI video format", in the Vendor Specific InfoFrame packet. Specifically, it is possible to determine whether a 3D format or not by referring to a seventh to a fifth bits indicating "HDMI video format".

As shown by the details of "HDMI video format" in FIG. 9C, "010" indicates that the video signal is a 3D format, and thus if "HDMI video format" is "010", it is possible to determine that the video signal is 3D. As is understood from the details of "HDMI video format" in FIG. 9C, "000", "001", and "011 to 111" other than "010" do not indicate that the video format is a 3D format. Accordingly, if the values from the seventh bit to the fifth bit, which indicate "HDMI video format", are any one of "000", "001", and "011 to 111", the video signal is determined not to be 3D.

Further, it is possible to determine a kind of 3D method by referring to the fifth byte, "3D Structure" of the Vendor Specific InfoFrame packet. In the example shown in FIG. 9D, the frame packing method is related to a value "0000". The top-and-bottom method is related to "0110". Further, the side-by-side method is related to "1000".

Accordingly, when the value of "3D Structure" of the Vendor Specific InfoFrame packet is "0110", it is possible to determine that the method is the top-and-bottom method. Also, when the value of "3D Structure" is "1000", it is possible to determine that the method is the side-by-side method. In this regard, in the details of the 3D Structure shown in FIG. 9D, no 3D method is related to "0001 to 0101" and "1001 to 1111". However, if a new 3D method is assigned to one of these values, it is possible to determine the new 3D method in the same manner.

Also, as the other determination method, there is a method of determining whether 2D or 3D by checking whether a Vendor Specific InfoFrame packet has been transmitted. In this method, a determination of 2D is made when a Vendor Specific InfoFrame packet has not been transmitted from the source, and if the Vendor Specific InfoFrame packet is not stored in the register 202a.

Also, it is thought that there is a case where although the video signal is 2D, a Vendor Specific InfoFrame packet is transmitted and stored in the register 202a. In that case, it is possible to determine that the video signal is 2D if the value of the HDMI Video Format of the Vendor Specific InfoFrame packet is "000". As shown in FIG. 9C, "no additional HDMI video format is presented in the Vendor Specific InfoFrame packet" is related to "000".

In this manner, the microcomputer 206 determines whether the format of the video signal transmitted from the transmission apparatus 100 as a source is 2D or 3D. And if determined 2D, the microcomputer 206 transmits a predetermined control signal to the selector 205 in order to select the first bus going through the video processor 203. And the selector 205 outputs the video signal to the HDMI transmission section 207 through the first bus.

On the other hand, if the microcomputer 206 has determined that the format of the video signal is 3D, the microcomputer 206 transmits a predetermined control signal to the selector 205 in order to select the second bus which is a path directly connecting the HDMI receiving section 202 and the HDMI transmission section 207 without going through the video processor 203. And the selector 205 outputs the video signal to the HDMI transmission section 207 through the second bus.

And the HDMI transmission section 207 converts the video signal output from the selector 205 and the audio signal output from the HDMI receiving section 202 into an HDMI signal again, and outputs the signal to the HDMI output terminal 208. And the HDMI signal is transmitted from the HDMI output terminal 208 to the receiving apparatus 300 through the second HDMI cable 502. And the receiving apparatus 300 finally outputs the video. Also, the sound is output from the receiving apparatus 300 or/and the speaker 400.

In this manner, if the video signal included in the HDMI signal transmitted from the transmission apparatus 100 is 3D, the video signal dose not go through the video processor 203 not supporting 3D. Thereby, even when the video processor 203 does not support 3D, if the HDMI receiving section 202 and the HDMI transmission section 207 support 3D, it becomes possible for the transmission and receiving apparatus 200 to support 3D.

Accordingly, it is possible to describe a 3D format in the EDID of the transmission and receiving apparatus 200. Thus, it is possible for the transmission apparatus 100 to refer to the EDID of the transmission and receiving apparatus 200 at the time of transmitting the HDMI signal, to determine that the transmission and receiving apparatus 200 supports a 3D format, and to transmit the HDMI signal including a 3D-video signal to the transmission and receiving apparatus 200.

### 1.3 HDCP authentication processing

In the following, a description will be given of HDCP (High-bandwidth Digital Content Protection system) authentication in the present embodiment. As described above, a change of the first bus and the second bus accompanies a disconnection of the video signal, and thus if the bus is changed inadvertently, it might cause a failure of HDCP authentication. If the HDCP authentication fails, an image interruption, etc., might occur, causing deterioration of the image quality as a result. Accordingly, in the present embodiment, it is possible to prevent deterioration of the image quality by performing the HDCP authentication in the procedure described below.

The HDCP authentication is a specification in which a transmission side that transmits a content authenticates a receiving side that receives the content so as to protect the content by encrypting and transmitting the content. In HDCP, three stages of authentication are performed, each of which is called first authentication, second authentication, and third authentication. As a result of the authentication, if the receiving side is determined to be not an unauthorized device, it becomes possible for the receiving side to decrypt the content that has been encrypted by the transmission side. The HDCP authentication is performed using communication through a DDC.

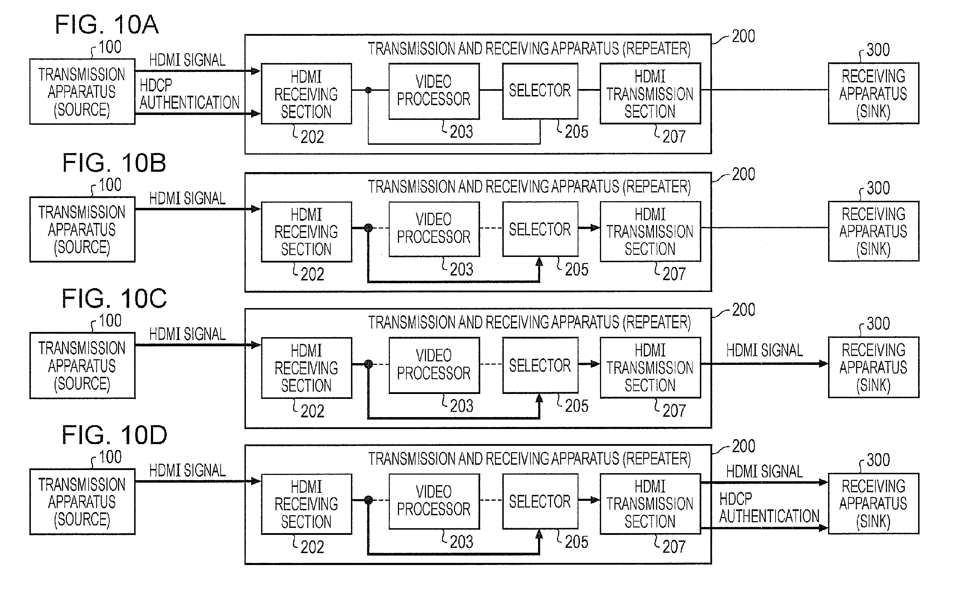

First, a description will be given of an overview of the HDCP authentication according to the present embodiment with reference to FIG. 10. In this regard, in the block diagrams in FIGs. 10A, 10B, 10C, and 10D, only portions related to flows of the HDMI signal and the video signal included therein, and further related to the HDCP authentication are extracted and described.

As shown in FIG. 10A, first, the HDMI receiving section 202 of the transmission and receiving apparatus 200, which is a repeater, receives the HDMI signal including the video signal, which has been transmitted from the transmission apparatus 100. When the HDMI receiving section 202 receives the HDMI signal, the microcomputer 206 determines the video format of the video signal. And the buses are changed as shown in FIG. 10B on the basis of the determination result.

Next, as shown in FIG. 10C, the HDMI transmission section 207 transmits the HDMI signal to the receiving apparatus 300. And as shown in FIG. 10D, after starting transmission of the HDMI signal to the receiving apparatus 300, the HDCP authentication is performed. That is to say, even if the transmission apparatus 100 requests the HDCP authentication, the HDCP authentication is not performed until the transmission of the HDMI signal to the receiving apparatus 300 is started.

If such an order is not followed, for example, if a determination of the video format of the video signal and a change of the buses are performed after the HDCP authentication, a disconnection of the video signal might occur after the HDCP authentication, resulting in a failure of the HDCP authentication. Thereby, an image interruption, noise, etc., occurs, deteriorating the image quality.

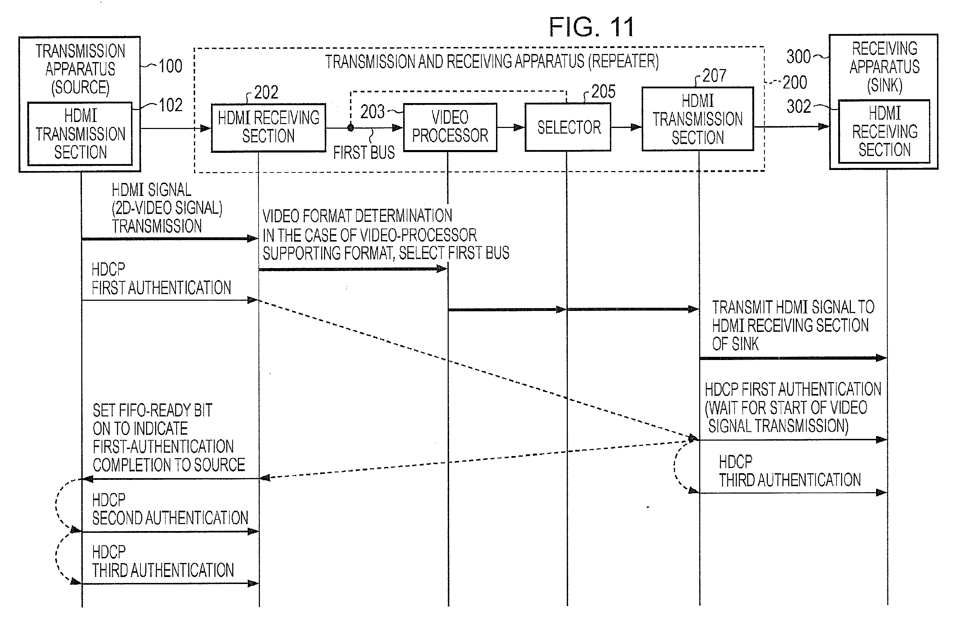

Next, a detailed description will be given of the HDCP authentication according to the present embodiment with reference to the sequence diagram in FIG. 11. FIG. 11 is a sequence diagram in the case where the video format is 2D, and the selector 205 has selected the first bus going through the video processor 203. In the sequence diagram, a bold line denotes a flow of the HDMI signal or the video signal included therein, and a thin line denotes the HDCP authentication processing.

First, the transmission apparatus 100 transmits the HDMI signal including the video signal having a 2D format to the HDMI receiving section 202 of the transmission and receiving apparatus 200. When the HDMI receiving section 202 receives the HDMI signal, the microcomputer 206 determines the video format. In FIG. 11, the video format is 2D, and thus the selector 205 selects the first bus that goes through the video processor 203. Also, the transmission apparatus 100 requests first authentication of the HDCP authentication. However, as described above, the authentication is performed after starting the transmission of the HDMI signal to the receiving apparatus 300, and thus the first authentication is not performed at this point in time.

Next, the video signal is subjected to GUI combination processing by the video processor 203, etc., and is output to the HDMI transmission section 207. And the video signal having been processed by the video processor 203 is converted into an HDMI signal together with the audio signal by the HDMI transmission section 207 again to be transmitted to the receiving apparatus 300.

And the first authentication is performed after the transmission section 207 starts the transmission of the HDMI signal HDMI to the receiving apparatus 300. In the first authentication, first, the HDMI transmission section 207 obtains authentication information necessary for the authentication between the devices from the register of the HDMI receiving section 302 of the connected receiving apparatus 300. The authentication information includes KSV (Key Selection Vector) specified by the HDCP standard. And the HDMI transmission section 207 determines that the authentication with the receiving apparatus 300 has been successful if the obtained authentication information is valid. If the first authentication has been successful, next, the transmission and receiving apparatus 200 sets FIFO READY BIT on to indicate that the first authentication with the receiving apparatus 300, which is the sink, has been successful to the transmission apparatus 100, which is the source. On the other hand, if the authentication information is unauthorized, or if the HDMI transmission section 207 has failed to read the authentication information, the HDMI transmission section 207 determines that the authentication of the receiving apparatus 300 has failed.

Next, the second authentication is performed. The second authentication is authentication that is necessary when a repeater is connected to the transmission apparatus 100, which is the source. Accordingly, prior to the second authentication, the transmission apparatus 100 determines whether a device connected to the transmission apparatus 100 is a repeater or not. A determination of whether the connected device is a repeater or not is made, for example, by reading, from the connected device, a bit string called "REPEATER", which indicates that the device is a repeater or a sink. In the present embodiment, the transmission apparatus 100, which is the source, is connected to the transmission and receiving apparatus 200, which is a repeater, and thus the second authentication is performed.

In the second authentication, first, the transmission and receiving apparatus 200 generates a hash value h from KSV List, which is the authentication information as a repeater, a bit string called Bstatus, and a secret value using a hash function. And the transmission and receiving apparatus 200 transmits the generated hash value h and the KSV List to the HDMI transmission section 102 of the transmission apparatus 100. Next, the HDMI transmission section 102 calculated the received hash value h and a hash value h' of the KSV List. And if the calculated hash value h' and the received hash value h match, the HDMI transmission section 102 determines that the second authentication has succeeded. On the other hand, if the calculation results do not match, the HDMI transmission section 102 determines that the second authentication has failed.

Next, the third authentication is performed. The third authentication is authentication based on the video data. First, the HDMI transmission section 102 of the transmission apparatus 100 and the HDMI receiving section 202 of the transmission and receiving apparatus 200 calculate authentication keys, respectively. The HDMI transmission section 102 and the HDMI receiving section 202 calculate the keys using block encryption in "HDCP BlkCipher". The calculated key is transmitted from the HDMI receiving section 202 to the HDMI transmission section 102.

And the HDMI transmission section 102 compares the key received from the HDMI receiving section 202 and the key calculated by itself, determines whether they match, and determines whether the HDMI receiving section 202 is a device capable of decoding the HDMI signal. The determination is performed for each about two seconds. And if they match, it is determined that the third authentication has succeeded. If they do not match, it is determined that the third authentication has failed. The third authentication is also performed between the HDMI transmission section 207 of the transmission and receiving apparatus 200 and the HDMI receiving section 302 of the receiving apparatus 300. The HDCP authentication is performed as described above.

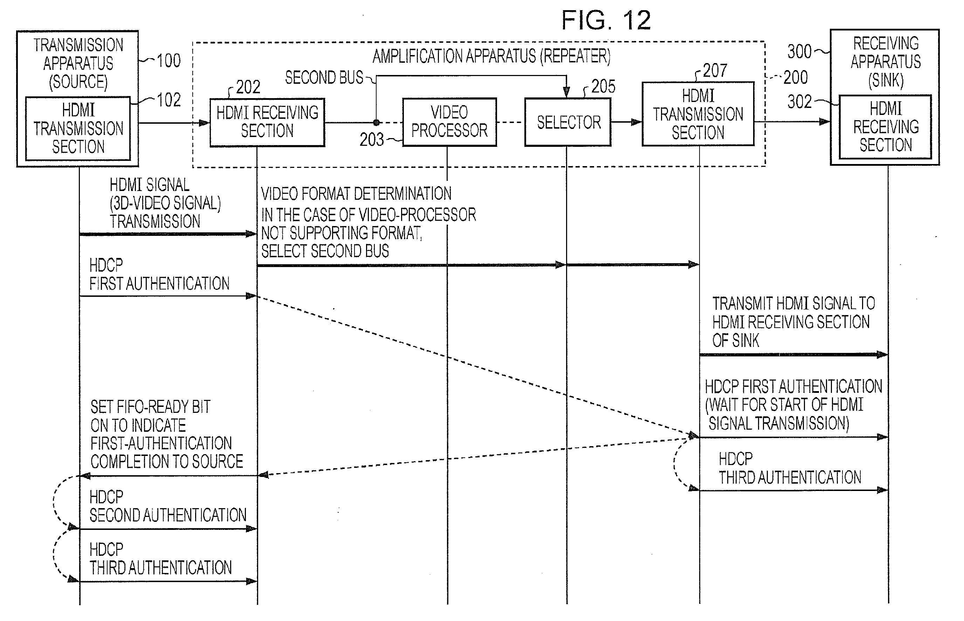

Next, with reference to a sequence diagram in FIG. 12, a description will be given of the case where the video format is 3D, and the selector 205 selects the second bus that does not go through the video processor 203. In the sequence diagram, bold lines denote flows of video signals, and thin lines denote HDCP authentication processing.

First, the transmission apparatus 100 transmits the HDMI signal including the video signal having a 3D format to the HDMI receiving section 202 of the transmission and receiving apparatus 200. When the HDMI receiving section 202 receives the HDMI signal, the microcomputer 206 determines the video format. In FIG. 12, the video format is 3D, and thus the selector 205 selects the second bus that does not go through the video processor 203. Also, the transmission apparatus 100 requests the first authentication of the HDCP authentication. However, as described above, the authentication is performed after starting the transmission of the HDMI signal to the receiving apparatus 300, and thus the first authentication is not performed at this point in time. Next, the video signal is output to the HDMI transmission section 207 without going through the video processor 203. And the video signal is converted into the HDMI signal by the HDMI transmission section 207 together with the audio signal, and the HDMI signal is transmitted to the receiving apparatus 300.

And the first authentication is performed after starting the transmission of the HDMI signal. The first authentication is performed in the same manner as shown in the case where the video format is 2D. If the first authentication has been successful, next, the transmission and receiving apparatus 200 sets FIFO READY BIT on to indicate that the first authentication with the receiving apparatus 300, which is the sink, has been successful to the transmission apparatus 100, which is the source. Next, the second authentication is performed. Further, the third authentication is performed. The second authentication and the third authentication are performed in the same manner as in the case where the video format is 2D. The HDCP authentication is performed as described above.

In this manner, even if the transmission apparatus 100 requests HDCP authentication, the HDCP authentication is not performed until the change of the buses has been completed, and the transmission of the HDMI signal including the video signal to the receiving apparatus 300 is started. And the HDCP authentication is performed after changing the buses and starting the transmission of the HDMI signal. Thereby, it is possible to prevent deterioration of the image quality, such as an image interruption, noise, etc., which are caused by a failure in the HDCP authentication because of the occurrence of a disconnection of the video signal after the HDCP authentication.

In this regard, while the HDMI signal is transmitted to the receiving apparatus 300, which is the sink, the user may be allowed to select whether the HDMI signal goes through the first bus that goes by way of the video processor 203 or goes through the second bus that does not go by way of the video processor 203. The selection is input by an input means, such as a button, etc., (not shown in the figure) disposed on the transmission and receiving apparatus 200, or a remote controller (not shown in the figure), etc., of the transmission and receiving apparatus 200.

In that case, the buses are changed while the HDMI signal is transmitted and received in a stable state. Thus, it is possible to suppress deterioration of the image quality by changing the buses and performing the HDCP authentication as described below to minimize image interruption time.

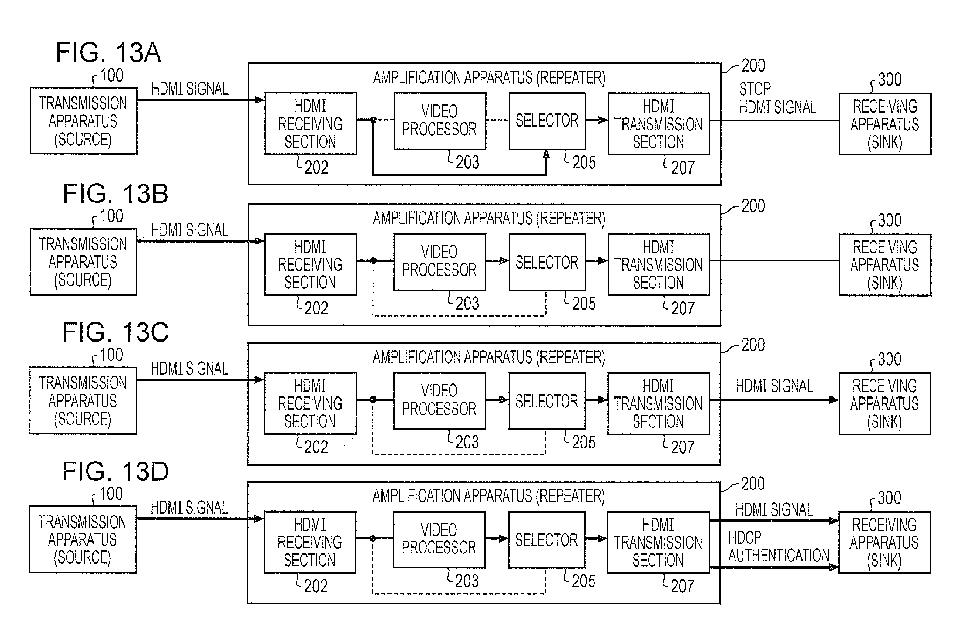

First, a description will be given of an overview of a change of the buses in a stable state and a flow of the HDCP authentication with reference to FIG. 13. When the HDMI signal is being transmitted to the receiving apparatus 300 in a stable state, if the user inputs an instruction to change the buses to the transmission and receiving apparatus 200, as shown in FIG. 13A, the HDMI transmission section 207 stops the transmission of the HDMI signal to the receiving apparatus 300. Next, as shown in FIG. 13B, the bus is changed from the second bus to the first bus.

Next, as shown in FIG. 13C, the HDMI transmission section 207 of the transmission and receiving apparatus 200 restarts the transmission of the HDMI signal to the receiving apparatus 300. And, as shown in FIG. 13D, the HDCP authentication is performed only between the receiving apparatus 300 and the transmission and receiving apparatus 200.

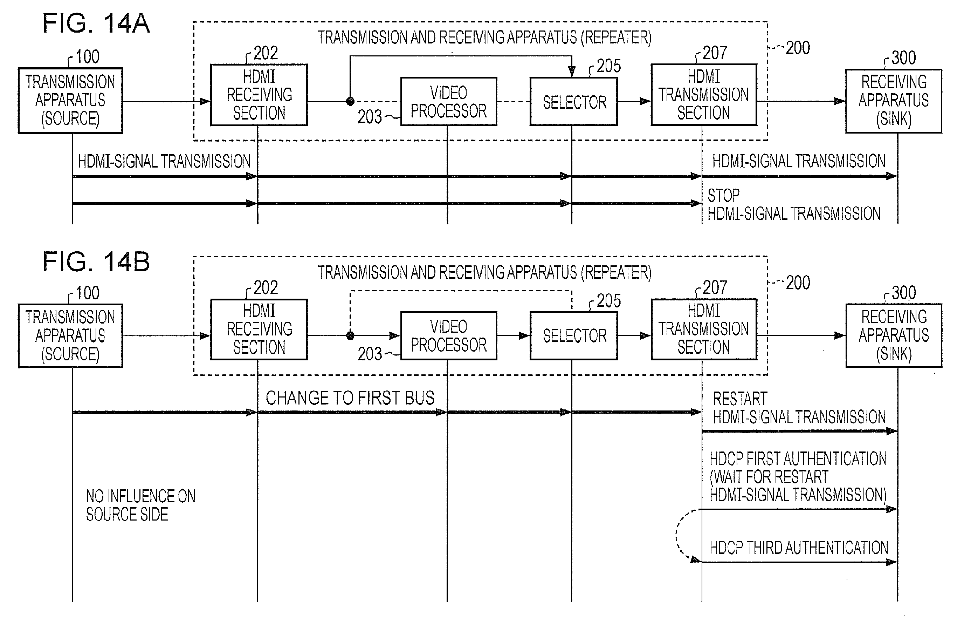

Next, a detailed description will be given of a change of the buses in a stable state and a flow of the HDCP authentication with reference to a sequence diagram in FIG. 14. First, as shown in FIG. 14A, it is assumed to be in a state in which the first HDCP authentication to the third HDCP authentication have been successful, and the HDMI signal is transmitted and received stably. And when the user inputs an instruction for changing the buses into the transmission and receiving apparatus 200 as shown in FIG. 14A, the HDMI transmission section 207 of the transmission and receiving apparatus 200 stops the transmission of the HDMI signal to the receiving apparatus 300 before changing the buses.

Next, as shown in FIG. 14B, the bus is changed from the second bus to the first bus. In this regard, as shown in FIG. 14B, the change from the second bus to the first bus is an example. Thus, of course, it is possible to change from the first bus to the second bus. And the HDMI transmission section 207 of the transmission and receiving apparatus 200 restarts the transmission of the HDMI signal to the receiving apparatus 300.

Before changing the buses, the transmission of the HDMI signal to the receiving apparatus 300 is stopped. Thus, next, only the HDCP authentication between the transmission and receiving apparatus 200 and the receiving apparatus 300 is performed again. First, the first authentication is performed between the transmission and receiving apparatus 200 and the receiving apparatus 300. The first authentication is performed after restarting the transmission of the HDMI signal to the receiving apparatus 300. And after the first authentication has been successful, the third authentication is performed. In this regard, the first authentication and the second authentication between the transmission apparatus 100, which is the source, and the transmission and receiving apparatus 200, which is the repeater, are not performed. Accordingly, the transmission apparatus 100 is not influenced, and thus it is not necessary to read the EDID once again and to redo the entire process of the HDCP authentication.

The following case is considered instead of transmitting the HDMI signal and performing the HDCP authentication again in the above-described procedure. For example, it is thought that when the bus is changed, a hot plug is toggled to the transmission apparatus 100 in place of performing the authentication between the transmission and receiving apparatus 200 and the receiving apparatus 300. In this regard, "to toggle" is to control so as to change a hot plug signal to low, to wait for a predetermined time period, and then to change the hot plug to high. When the hot plug is toggled in such a way, the transmission apparatus 100 responds to the toggle, reads the EDID again, and performs the entire process of the HDCP authentication processing again. Thereby, it takes a long time until the receiving apparatus 300 outputs a video after the bus is changed. As a result, an interruption of the image becomes long, which results in deterioration of image quality. Accordingly, in the present embodiment, instead of toggling a hot plug to the transmission apparatus 100, the authentication is performed again only between the transmission and receiving apparatus 200 and the receiving apparatus 300. Accordingly, it is possible to suppress the above-described deterioration of image quality.

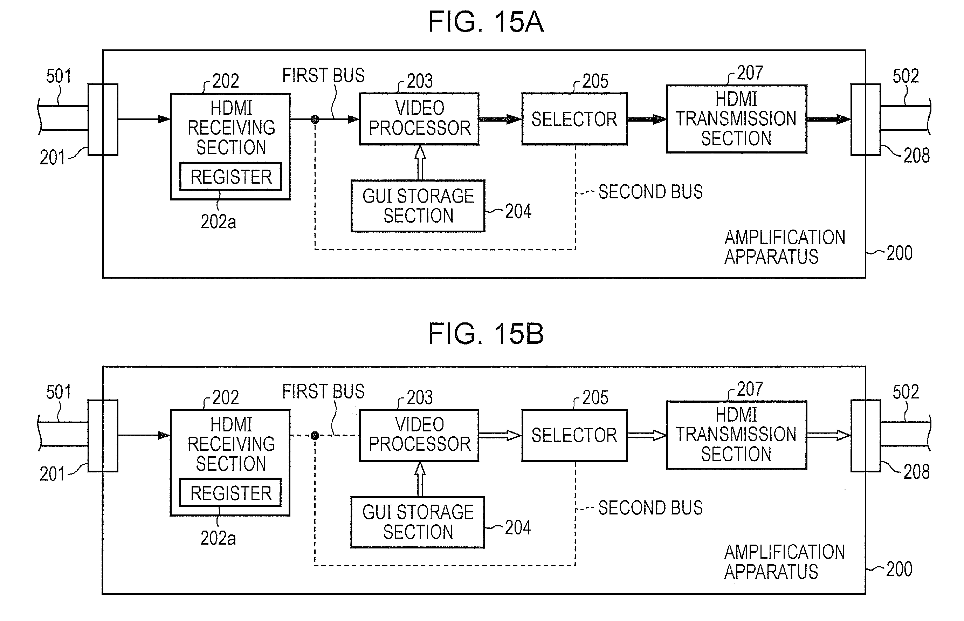

In the above-described embodiment, if the video format is 2D, as shown in FIG. 15A, the HDMI signal including the video signal having been subjected to the GUI combination processing performed by the video processor 203 supporting 2D is transmitted. In FIGs. 15A and 15B, a dotted line denotes a wire line among each of the blocks, a solid line denotes a video signal or a TMDS signal including the video signal, a double line denotes a GUI image signal or an HDMI signal that has been converted from a GUI image signal, and further, a bold line denotes a video signal having been subjected to the GUI combination processing or an HDMI signal including the video signal. In this regard, in FIG. 15, in order to make it easy to understand the flow of the video signal, a portion related to the audio signal is omitted.

On the other hand, if the video format is 3D, the HDMI signal is transmitted without going through the video processor 203 not supporting 3D. Since the HDMI signal does not go through the video processor 203, GUI display is not performed in 3D. However, it is thought that there are cases where GUI display is necessary even if the video format is 3D. In that case, as shown in FIG. 15B, the HDMI receiving section 202 does not output the video signal. The HDMI transmission section 207 converts a GUI image signal into an HDMI signal, and transmits the signal to the receiving apparatus 300.

### 2. Variations

In the above, a description has been specifically given of an embodiment of the present disclosure. However, the present disclosure is not limited to the above-described embodiment, and various variations are possible without departing from the spirit and scope of this disclosure. As shown in FIG. 1, in the above-described embodiment, the selector 205 is disposed in the subsequent stage of the video processor 203. However, the selector 205 may be disposed in the preceding stage of the video processor 203. When the selector 205 is disposed in the preceding stage of the video processor 203, a selection ought to be made such that if the video processor 203 supports the format of a video signal, the video signal is output to the video processor 203, and if the video processor 203 does not support the video signal, the video signal is not output to the video processor 203.

Also, a description has been given of the case where there are two signal paths, the first bus and the second bus in the embodiment. However, the signal paths are not limited to two. If there are a plurality of signal processing sections not supporting a video format, signal paths ought to be disposed in accordance with the number of the signal processing sections.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

The present disclosure contains subject matter related to that disclosed in Japanese Priority Patent Application JP 2010-178946 filed in the Japan Patent Office on August 9, 2010, the entire contents of which are hereby incorporated by reference.

## Claims

1. A transmission and receiving apparatus comprising:
a receiving section receiving a content signal conforming to a predetermined transmission standard, and restoring a video signal included in the content signal to output the video signal;
a video-signal processing section performing predetermined processing on the video signal output from the receiving section;
a selection section selecting either a signal path allowing the video signal to go through the video-signal processing section or a signal path not allowing the video signal to go through the video-signal processing section; and
a transmission section converting the video signal having gone through the signal path selected by the selection section into a content signal conforming to the predetermined transmission standard, and transmitting the content signal.

2. The transmission and receiving apparatus according to Claim 1, further comprising a format determination section determining a format of the video signal output from the receiving section,
wherein if the video-signal processing section does not support the format of the video signal determined by the format determination section, the selection section selects the signal path not allowing the video signal to go through the video-signal processing section.

3. The transmission and receiving apparatus according to Claim 2,
wherein the format determination section determines the format of the video signal on the basis of timing of the video signal.

4. The transmission and receiving apparatus according to Claim 3,
wherein the timing of the video signal is based on a vertical synchronization signal.

5. The transmission and receiving apparatus according to Claim 2,
wherein the format determination section determines the format of the video signal on the basis of attribute data of the video signal.

6. The transmission and receiving apparatus according to Claim 5,
wherein the attribute data of the video signal is Vendor Specific InfoFrame.

7. The transmission and receiving apparatus according to Claim 1,
wherein the predetermined processing performed by the video-signal processing section is processing combining a video related to the video signal with a GUI.

8. The transmission and receiving apparatus according to Claim 1, wherein the predetermined transmission standard is HDMI.

9. The transmission and receiving apparatus according to Claim 1,
wherein if the signal path is changed by the selection section before transmission of the content signal by the transmission section is started, authentication processing with a connected transmission apparatus and a receiving apparatus is performed after transmission of the content signal by the transmission section is started.

10. The transmission and receiving apparatus according to Claim 1,
wherein a change of the signal path by the selection section is made on the basis of an instruction by a user, and
if the instruction of a change of the signal path by the user is given after transmission of the content signal by the transmission section has been started,
the selection section changes the signal path after the transmission of the content signal by the transmission section is stopped, and
authentication processing with a connected receiving apparatus is performed after the transmission of the content signal by the transmission section is restarted.

11. A method comprising:
receiving a content signal conforming to a predetermined transmission standard, and restoring a video signal included in the content signal to output the video signal;
performing predetermined processing on the video signal output from the receiving by a video-signal processing section;
selecting either a signal path allowing the video signal to go through the video-signal processing section or a signal path not allowing the video signal to go through the video-signal processing section; and
converting the video signal having gone through the signal path selected by the selecting into a content signal conforming to the predetermined transmission standard, and transmitting the content signal.
